# EUROPÄISCHE PATENTSCHRIFT

(11) **EP 1 201 538 B1**
(45) Veröffentlichungstag und Bekanntmachung des Hinweises auf die Patenterteilung: **15.01.2003**
(21) Anmeldenummer: 01125028.9
(22) Anmeldetag: 20.10.2001
(51) Int. Cl.: B64C 27/605

(54) **Rotorblatt-Steuerungsvorrichtung**
Rotor blade control device
Dispositif de commande des pales du rotor

(30) Priorität: 25.10.2000 DE 10052757
(43) Veröffentlichungstag der Anmeldung: 02.05.2002
(73) Patentinhaber: ZF Luftfahrttechnik GmbH, 34379 Calden (DE)
(72) Erfinder: Platzer, Michael, 34302 Ellenberg (DE)
(74) Vertreter: Zietlow, Karl-Peter

(56) Entgegenhaltungen:
- DE-A- 19 841 855
- US-A- 3 756 743
- US-A- 3 926 536
- US-A- 6 099 254

## Beschreibung

Die Erfindung betrifft eine Rotorblatt-Steuerungsvorrichtung für einen Hubschrauber-Hauptrotor mit einer Steuerspinne nach dem Oberbegriff des Hauptanspruchs.

Mit üblichen Rotorblatt-Steuerungsvorrichtungen lässt sich der Einstellwinkel der einzelnen Rotorblätter des Hubschrauber-Hauptrotors kollektiv und zyklisch zur Rotationsebene anstellen. Um den Auftrieb zu verändern, wird der Einstellwinkel aller Rotorblätter kollektiv, das heißt gleichzeitig und um den selben Betrag verändert. Nickbewegungen um die Querachse des Hubschraubers oder Rollbewegung um die Längsachse des Hubschraubers werden durch eine zyklische Einstellwinkelveränderung der einzelnen Rotorblätter eingeleitet, wobei alle Rotorblätter bei ihrem Umlauf dieselbe, sinusförmige Einstellwinkelbewegung durchlaufen. Bei jeder Rotorumdrehung wird dabei ein Maximum und ein Minimum des Einstellwinkels durchlaufen, wobei bei einem stationären Steuerzustand die Lage der Extremwerte für alle Rotorblätter dieselbe ist.

Zur Übertragung der Steuerbewegungen vom stehenden System der Hubschrauberzelle ins drehende System des Hubschrauber-Hauptrotors ist es üblich, eine Taumelscheibenoder eine Spinnensteuerung vorzusehen.

Es hat sich gezeigt, dass Verbesserungen des Rotorwirkungsgrades, der Lebensdauer des Hubschraubers sowie des Komforts erzielt werden können, indem der kollektiven und sinusförmigen, monozyklischen Einstellwinkelverstellung weitere Einstellwinkeländerungen überlagert werden, um beispielsweise rotorblattinduzierten Schwingungen entgegenzuwirken. Um von der reinen Sinusform abweichende Stellbewegungen zu erhalten, werden höherharmonische Steuerbewegungen mit verschiedenen Vielfachen der Grundfrequenz bzw. der Grund-Winkelgeschwindigkeit des Hauptrotors überlagert. Mit einer üblichen Taumelscheiben- oder Spinnensteuerung können voneinander unabhängige Steuerbewegungen vom stehenden System der Hubschrauberzelle ins drehende System des Hubschrauber-Hauptrotors aber nur für maximal drei Rotorblätter übertragen werden. Sollen mehr als drei Rotorblätter unabhängig voneinander angesteuert werden, so ist für jedes, über die Anzahl von drei hinausgehende, Rotorblatt ein weiterer Freiheitsgrad im Übertragungssystem vorzusehen.

Die DE 196 27 869 A1 zeigt eine Rotorblatt-Steuerungsvorrichtung, bei der für jedes, über die Anzahl von drei hinausgehende, Rotorblatt ein Stellglied zwischen einem drehbaren Teil der Taumelscheibe und den Rotorblatt-Aufnahmen vorgesehen ist. Nachteilig bei diesem System ist der unsymmetrische Aufbau, bei dem die durch die zusätzlichen Stellglieder verursachte Unwucht ausgeglichen werden muss. Darüber hinaus hat das System einen erhöhten Raumbedarf und bedarf eines aufwendigeren Sicherungssystems.

Aus der US 4,930,988 ist eine Taumelscheiben-Steuerung für einen Vierblatt-Rotorkopf bekannt, bei welcher ein weiteres Stellglied vorgesehen ist, das zwei sich gegenüberliegenden Rotorblättern eine zusätzliche Steuerbewegung überlagert. Für die Grundsteuerung ist dabei ein übliches Taumelscheiben-System vorgesehen, das durch eine aufwendige Mechanik erweitert wurde.

Die US 3,926,536 zeigt eine Rotorblatt-Steuerungsvorrichtung für einen Hubschrauber-Hauptrotor mit vier Rotorblättern, die gleichmäßig am Umfang einer Rotornabe angeordnet sind. Die Rotornabe ist Teil eines Rotormasts, der von einem Hauptgetriebe antreibbar ist. Zur Übertragung der Steuerbewegungen vom nichtdrehenden ins drehende System ist eine Steuerspinne mit vier Armen vorgesehen, wobei jeder Arm einen Anlenkpunkt aufweist, der über eine Steuerstange an ein Blatthorn eines Rotorblatts gekoppelt ist. Die Steuerspinne weist entlang einer Mittelachse einen zentralen Schaft mit einem Fußpunkt auf, wobei die Steuerbewegungen am Fußpunkt eingeleitet werden. Zum Kippen der Steuerspinne gegenüber dem Rotormast wird der Fußpunkt horizontal durch Stellglieder aus der Drehachse des Rotormasts verschoben. Damit wird eine zyklische Einstellwinkelbewegung der Rotorblätter eingesteuert. Zur kollektiven Einstellwinkelbewegung wird die Steuerspinne durch Stellglieder parallel zur Drehachse des Rotormasts, also vertikal, verschoben. Gegenüber einer Taumelscheiben-Steuerung weist eine Spinnensteuerung den Vorteil eines einfacheren mechanischen Aufbaus auf.

Der Erfindung liegt die Aufgabe zugrunde, eine Rotorblatt-Steuerungsvorrichtung für einen vierblättrigen Hubschrauber-Hauptrotor mit einer Steuerspinne so weiterzubilden, dass an den Rotorblättern beliebige höherharmonische Einstellwinkelbewegungen eingesteuert werden können.

Diese Aufgabe wird durch eine, auch die Merkmale des kennzeichnenden Teils des Hauptanspruchs aufweisende, Rotorblatt-Steuerungsvorrichtung gelöst. Vorteilhafte Ausgestaltungen sind durch die Unteransprüche gegeben.

Erfindungsgemäß ist die Steuerspinne also zweiteilig ausgebildet, wobei ein erster Teil zwei gegenüberliegende Arme der Steuerspinne umfasst, die starr miteinander verbunden sind und ein zweiter Teil der Steuerspinne die anderen beiden sich gegenüberliegenden Arme der Steuerspinne umfasst, die starr mit dem Schaft verbunden sind. Zwischen dem ersten und dem zweiten Teil der Steuerspinne ist ein Aktuator zur axialen Verschiebung des ersten Teils gegenüber dem zweiten Teil entlang der Mittelachse der Steuerspinne angeordnet. Während bei blockiertem Aktuator die Steuerfunktionen einer herkömmlichen Steuerspinne möglich sind, d. h. kollektive und monozyklische Rotorblatt-Verstellung durch vertikale bzw. horizontale Verschiebung des Fußpunkts der Steuerspinne, wird durch die Bewegung des Aktuators ein weiterer Freiheitsgrad geschaffen. Damit sind nicht nur die höherharmonischen, deren Ordnung den ganzzalig Vielfachen der Rotorblattanzahl Vier und deren Nachbarordnungen einsteuerbar, also die dritte, vierte, fünfte, siebte, achte, neunte usw. Ordnung, sondern auch die zweite, sechste, zehnte usw. Ordnung. Ein weiterer Vorteil besteht darin, dass der Aktuator praktisch im Drehzentrum des Rotormasts angeordnet ist, und daher nur geringen Zentrifugalkräften ausgesetzt ist. Die Ansteuerung und Versorgung des Aktuators gestaltet sich durch im oder entlang des Schafts verlaufende Leitungen einfach.

Die Auswirkungen einer Fehlfunktion bzw. eines Ausfalls des Aktuators zwischen den beiden Teilen der Steuerspinne können in Grenzen gehalten werden. Einerseits durch eine mechanische Begrenzung des maximalen Stellwegs des Aktuators auf eine freigegebene Autorität. Außerdem wirkt sich ein Ausfall des Aktuators nur auf den kollektiven Blatt-Einstellwinkel von zwei gegenüberliegenden Rotorblättern aus. Es werden geringe aerodynamische Unwuchten erzeugt und die Auswirkungen können durch Veränderung des kollektiven Blatt-Einstellwinkels vom Piloten kompensiert werden. Es kommt zu einem Spurlaufunterschied, bei dem gegenüberliegende Blätter gleiche Einstellwinkel aufweisen. Bisherige Untersuchen haben gezeigt, dass bei hinreichend kleiner Differenz des Einstellwinkels ein solcher Zustand tolerabel ist. Daher ist es möglich, auf eine Redundanz der Aktuator-Funktion zu verzichten, wodurch das Gesamtsystem weniger komplex wird.

In einer vorteilhaften Ausgestaltung der Erfindung ist eine Verriegelungsvorrichtung für den Aktuator vorgesehen, womit bei Funktionsstörungen eine starre Verbindung des ersten und des zweiten Teils der Steuerspinne hergestellt werden kann. Ist der Aktuator ein hydraulischer Aktuator, der einen Hydraulikzylinder mit einem darin geführten Kolben aufweist, wobei an den Hydraulikzylinder mindestens eine hydraulische Zuleitung angeschossen ist, kann der Aktuator durch Absperren der hydraulischen Zuleitung verriegelt werden. Hierzu weist die Verriegelungsvorrichtung also mindestens ein in einer hydraulischen Zuleitung angeordnetes Sperrventil auf. Mit einer derartigen Verriegelungsvorrichtung ist der Aktuator in jeder Position verriegelbar.

In einer vorteilhaften Weiterbildung dieser Ausgestaltung ist der Kolben im Hydraulikzylinder von zwei Seiten mit Hydraulikmedium beaufschlagt, wobei für beide Seiten hydraulische Zuleitungen mit jeweils einem Sperrventil vorgesehen sind. Bei einer alternativen Ausgestaltung der Verriegelungsvorrichtung ist der Kolben im Hydraulikzylinder von einer Seite mit Hydraulikmedium und von der anderen Seite durch ein vorgespanntes elastisches Element, z. B. eine Feder oder Druckgas beaufschlagt. Bei einer Funktionsstörung ist der Kolben des Hydraulikzylinders durch das elastische Element in einer Endlage verriegelbar.

Eine weitere vorteilhafte Ausgestaltung einer Verriegelungsvorrichtung weist einen vorgespannten Riegel auf, der bei einer Fehlfunktion ausgelöst werden kann und in einer Verriegelungsposition in eine zugeordnete Ausnehmung eines Aktuatorteils einfällt. Mit einer derartigen Verriegelungsvorrichtung ist auch eine Mittenverriegelung möglich.

Die Erfindung wird anhand der beiliegenden Zeichnungen näher erläutert, wobei
- Fig. 1: schematisch eine räumliche Darstellung einer erfindungsgemäßen Rotorblatt-Steuerungsvorrichtung und
- Fig. 2: eine schematische Darstellung einer Verriegelungsvorrichtung
zeigen.

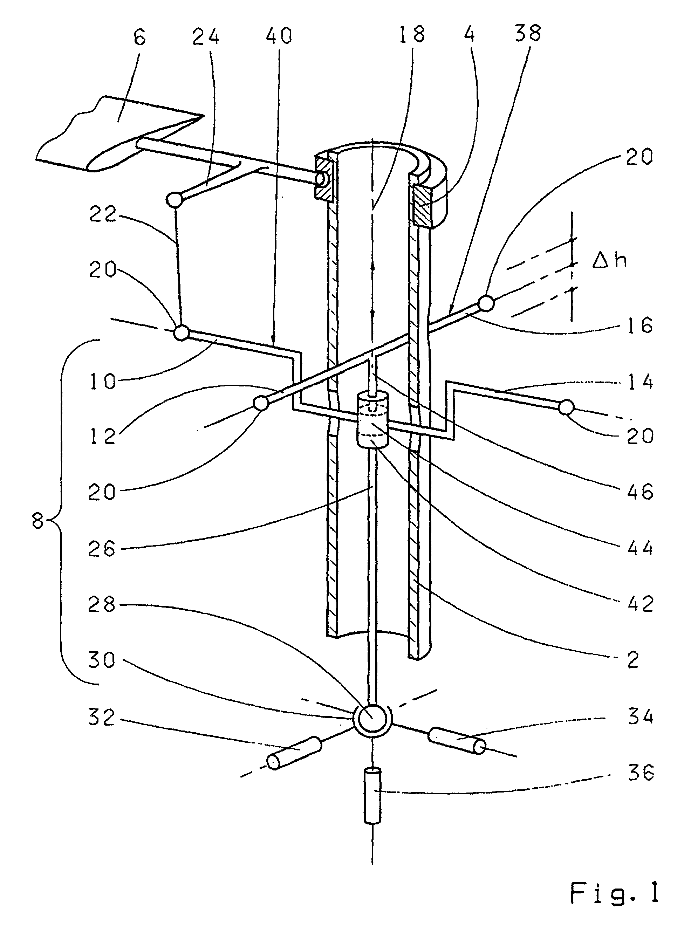

In Fig. 1 ist mit 2 ein von einem nicht dargestellten Hauptgetriebe antreibbarer Rotormast bezeichnet. Am Umfang einer Rotornabe 4 sind vier Rotorblätter 6 gleichmäßig verteilt angeordnet. Mit 8 ist eine Steuerspinne bezeichnet. Sie weist vier Arme 10, 12, 14, 16 auf, die von einer Mittelachse 18 radial nach außen weisen. An ihrem äußeren Ende weisen sie jeweils einen Anlenkpunkt 20 auf. Jeder der Anlenkpunkte 20 ist über eine Steuerstange 22 mit einem Blatthorn 24 eines Rotorblatts 6 gekoppelt. Die Steuerspinne weist entlang der Mittelachse 18 einen zentralen Schaft 26 mit einem Fußpunkt 28 auf. Der zentrale Schaft verläuft durch den hohlen Rotormast 2. Der Fußpunkt 28, der sich mit sich Rotormast 2 drehenden Steuerspinne 8, ist drehbar in einem Lager 30 gelagert. Der Fußpunkt 28 ist durch Stellglieder 32, 34, die auf das Lager 30 wirken, aus der Drehachse des Rotormasts 2 horizontal verschiebbar. Dabei wird die Steuerspinne 8 um einen Drehpunkt, der in der Nähe des von den vier Anlenkpunkten 20 gebildeten Mittelpunkts liegt gegenüber dem Rotormast gekippt. Hierdurch wird eine sinusförmige, monozyklische Einstellwinkelbewegung der Rotorblätter 6 bewirkt. Außerdem ist ein Stellglied 36 vorgesehen, mit dem die Steuerspinne parallel zur Drehachse des Rotormasts vertikal verschoben wird, was eine kollektive Einstellwinkel-Änderung an allen Rotorblättern 6 zur Folge hat.

Gemäß der vorliegenden Erfindung weist die Steuerspinne 8 zwei gegeneinander bewegliche Teile auf. Der erste Teil 38 der Steuerspinne 8 umfasst die beiden starr miteinander verbundenen, gegenüberliegenden Arme 12, 16. Der zweite Teil 40 der Steuerspinne umfasst die anderen beiden, sich gegenüber liegenden Arme 10, 14 der Steuerspinne 8, die starr mit dem Schaft 26 verbunden sind. Zwischen dem ersten und dem zweiten Teil der Steuerspinne ist ein Aktuator 42 zur axialen Verschiebung des ersten Teils gegenüber dem zweiten Teil entlang der Mittelachse 18 der Steuerspinne angeordnet. Außer der axialen Bewegung zwischen den beiden Teilen der Steuerspinne werden keine Relativbewegungen dieser Teile zugelassen. Insbesondere ist gewährleistet, dass eine Kippbewegung, die ja über den Fußpunkt zunächst auf den zweiten Teil der Steuerspinne übertragen wird, auch auf den ersten Teil der Steuerspinne übertragen wird.

Der gezeigte Aktuator 42 weist einen Hydraulikzylinder und einen darin geführten Kolben 44 auf, der mit einer Kolbenstange 46 verbunden ist, die starr mit den beiden Armen 12, 16 verbunden ist und zusammen mit diesen und dem Kolben 44 den ersten Teil 38 der Steuerspinne bildet. Der zweite Teil 38 der Steuerspinne ist entlang der Mittelachse der Steuerspinne um den Betrag Δh verschiebbar, wodurch ein weiterer Freiheitsgrad der Rotorblatt-Steuerungsvorrichtung geschaffen ist. Innerhalb der durch die maximalen Stellwege der Stellglieder 32, 34, 36 und des Aktuators 42 vorgegebenen Grenzen ist mit dieser Anordnung für jede Drehstellung entlang eines Rotorumlaufs jede beliebige Kombination der Steuerpositionen der vier Anlenkpunkte 20 realisierbar. Die Positionen der vier Anlenkpunkte 20 sind also linear unabhängig, so dass mit der erfindungsgemäßen Rotorblatt-Steuerungsvorrichtung auf einfache Weise die vollständige Reihe der höherharmonischen Ordnungen eingesteuert werden kann. Jede Kombination der Positionen der vier Anlenkpunkte 20 entspricht dabei einer Kombination von Steuerstellungen der Stellglieder 32, 34, 36 und des Aktuators 42.

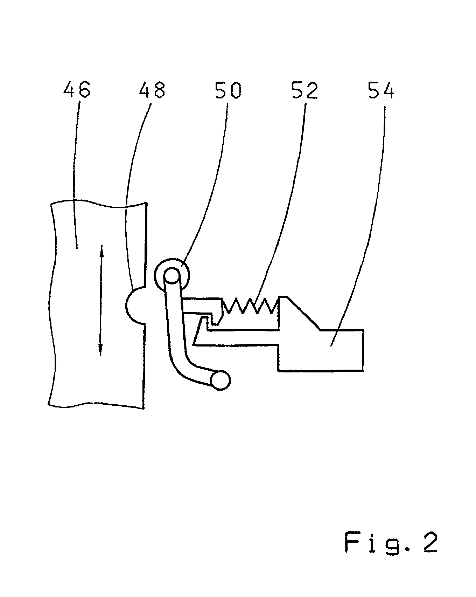

Fig. 2 zeigt eine Verriegelungsvorrichtung für die Kolbenstange 46 des Aktuators. Die Verriegelungseinrichtung weist einen durch eine Feder 52 vorgespannten Riegel 50 auf, der im Falle einer Fehlfunktion durch eine Auslösevorrichtung 54 ausgelöst wird und in eine zugeordnete Ausnehmung 48 in der Kolbenstange 46 einfällt.

Die vorliegende Erfindung erlaubt mit einem sehr einfachen mechanischen Aufbau eine höherharmonische Steuerung eines Vierblattrotors, wobei sämtliche Ordnungen eingesteuert werden können.

### Bezugszeichen

- 2: Rotormast
- 4: Rotornabe
- 6: Rotorblatt
- 8: Steuerspinne
- 10: Arm
- 12: Arm
- 14: Arm
- 16: Arm
- 18: Mittelachse
- 20: Anlenkpunkt
- 22: Steuerstange
- 24: Blatthorn
- 26: Schaft
- 28: Fußpunkt
- 30: Lager
- 32: Stellglied
- 34: Stellglied
- 36: Stellglied
- 38: erster Teil der Steuerspinne
- 40: zweiter Teil der Steuerspinne
- 42: Aktuator
- 44: Kolben
- 46: Kolbenstange
- 48: Ausnehmung
- 50: Riegel
- 52: Feder
- 54: Auslösemechanismus

## Patentansprüche

1. Rotorblatt-Steuerungsvorrichtung für einen Hubschrauber-Hauptrotor mit einem Rotormast (2), der von einem Hauptgetriebe um eine Drehachse drehantreibbar ist und mit vier Rotorblätter (6), die gleichmäßig am Umfang einer Rotornabe (4) angeordnet sind, mit folgenden Merkmalen:
- eine Steuerspinne (8) weist vier Arme (10, 12, 14, 16) mit jeweils einem Anlenkpunkt (20) auf, mit denen jeweils ein Einstellorgan (24) der Rotorblätter (6) gekoppelt ist,
- die Steuerspinne (8) weist entlang einer Mittelachse (18) einen zentralen Schaft (26) mit einem Fußpunkt (28) auf,
- der Fußpunkt (28) ist
- durch Stellglieder (32, 34) aus der Drehachse des Rotormasts (2) verschiebbar, wobei die Steuerspinne (8) gegenüber dem Rotormast (2) gekippt wird,
- durch Stellglieder (36) parallel zur Drehachse des Rotormasts (2) verschiebbar, wobei die Steuerspinne (8) parallel zur Drehachse des Rotormasts (2) verschoben wird,
**gekennzeichnet, durch** folgende Merkmale:
- ein erster Teil (38) der Steuerspinne (8) umfasst zwei gegenüberliegende Arme (12, 16) der Steuerspinne (8), die starr miteinander verbunden sind,
- ein zweiter Teil (40) der Steuerspinne (8) umfasst die anderen beiden, sich gegenüberliegenden Arme (10, 14) der Steuerspinne (8), die starr mit dem Schaft (26) verbunden sind,
- zwischen dem ersten und dem zweiten Teil der Steuerspinne (8) ist ein Aktuator (42) zur axialen Verschiebung des ersten Teils (38) gegenüber dem zweiten Teil (40) entlang der Mittelachse (18) der Steuerspinne (8) angeordnet.

2. Rotorblatt-Steuerungsvorrichtung nach Anspruch 1, **dadurch gekennzeichnet, dass** eine Verriegelungsvorrichtung für den Aktuator (42) vorgesehen ist zur starren Verbindung des ersten und des zweiten Teils der Steuerspinne (8).

3. Rotorblatt-Steuerungsvorrichtung nach Anspruch 2, **dadurch gekennzeichnet, dass** der Aktuator (42) ein hydraulischer Aktuator mit einem an mindestens eine hydraulische Zuleitung angeschlossenen Hydraulikzylinder und einem darin geführten Kolben (44) ist, und dass die Verriegelungsvorrichtung mindestens ein in einer hydraulischen Zuleitung angeordnetes Sperrventil aufweist.

4. Rotorblatt-Steuerungsvorrichtung nach Anspruch 2 oder 3, **dadurch gekennzeichnet, dass** der Kolben (44) im Hydraulikzylinder von einer Seite mit Hydraulikmedium und von der anderen Seite durch ein vorgespanntes elastisches Element beaufschlagt ist, wobei der Kolben durch das elastische Element in einer Endlage verriegelbar ist.

5. Rotorblatt-Steuerungsvorrichtung nach Anspruch 3, **dadurch gekennzeichnet, dass** der Kolben (44) im Hydraulikzylinder von zwei Seiten mit Hydraulikmedium beaufschlagt ist, und dass für beide Seiten hydraulische Zuleitungen mit jeweils einem Sperrventil vorgesehen sind.

6. Rotorblatt-Steuerungsvorrichtung nach einem der Ansprüche 2 bis 5, dass die Verriegelungsvorrichtung einen vorgespannten Riegel (50) aufweist, der bei einer Fehlfunktion ausgelöst werden kann und in einer Verriegelungsposition in eine zugeordnete Ausnehmung (48) eines Aktuatorteils (46) einfällt.

## Claims

1. Rotor blade control device for a helicopter main rotor having a rotor mast (2) which can be rotatingly driven about an axis of rotation by a main transmission and having four rotor blades (6) which are disposed uniformly on the periphery of a rotor hub (4), the said rotor blade control device having the following features:
- a control spider (8) has four arms (10, 12, 14, 16) each having a point of articulation (20) to each of which a setting component (24) of the rotor blades (6) is coupled,
- the control spider (8) has, along a central axis (18), a central shaft (26) having a base (28),
- the said base (28) is
- displaceable out of the axis of rotation of the rotor mast (2) by positioning members (32, 34), under which circumstances the control spider (8) is tilted in relation to the said rotor mast (2),
- displaceable parallel to the axis of rotation of the rotor mast (2) by positioning members (36), under which circumstances the control spider (8) is displaced parallel to the said axis of rotation of the rotor mast (2),
**characterised by** the following features:
- a first part (38) of the control spider (8) comprises two opposite arms (12, 16) of the control spider (8), which are rigidly connected to one another,
- a second part (40) of the control spider (8) comprises the other two mutually opposed arms (10, 14) of the said control spider (8), which are rigidly connected to the shaft (26),
- an actuator (42) for axially displacing the first part (38) in relation to the second part (40) along the central axis (18) of the control spider (8) is disposed between the first and second parts of the said control spider (8).

2. Rotor blade control device according to claim 1, **characterised in that** a locking device for the actuator (42) is provided for rigidly connecting the first and second parts of the control spider (8).

3. Rotor blade control device according to claim 2, **characterised in that** the actuator (42) is a hydraulic actuator having a hydraulic cylinder which is connected to at least one hydraulic feed line, and having a piston (44) which is guided in the said hydraulic cylinder, and that the locking device has at least one shut-off valve disposed in a hydraulic feed line.

4. Rotor blade control device according to claim 2 or 3, **characterised in that** the piston (44) is acted upon, in the hydraulic cylinder, with hydraulic medium from one side and by a pretensioned elastic element from the other side, under which circumstances the piston can be locked in an end position by the elastic element.

5. Rotor blade control device according to claim 3, **characterised in that** the piston (44) is acted upon, in the hydraulic cylinder, with hydraulic medium from both sides, and that hydraulic feed lines each having a shut-off valve are provided for both sides.

6. Rotor blade control device according to one of claims 2 to 5, **characterised in that** the locking device has a pretensioned bolt (50) which can be triggered in the event of a malfunction and, in a locking position, drops into an associated recess (48) in an actuator part (46).

## Revendications

1. Dispositif de commande de pales de rotor pour un rotor principal d'hélicoptère comprenant un mât de rotor (2) qui peut être entraîné en rotation autour d'un axe de rotation par une transmission principale et qui comprend quatre pales de rotor (6) qui sont disposées régulièrement à la périphérie d'un moyeu de rotor (4), et présentant les caractéristiques suivantes :
- une araignée de commande (8) comporte quatre bras (10, 12, 14, 16) ayant chacun un point d'articulation (20) auquel est accouplé respectivement un organe de réglage (24) des pales de rotor (6),
- l'araignée de commande (8) comporte, le long d'un axe central (18) un arbre central (26) ayant un point de pied (28),
- le point de pied (28) peut
- être écarté de l'axe de rotation du mât de rotor (2) par des organes de réglage (32, 34), l'araignée de commande (8) étant alors inclinée par rapport au mât de rotor (2),
- être déplacé en translation parallèlement à l'axe de rotation du rotor (2) par des organes de réglage (36), l'araignée de commande (8) étant alors déplacée parallèlement à l'axe de rotation du mât de rotor (2),
**caractérisé par** les caractéristiques suivantes :
- une première partie (38) de l'araignée de commande (8) comprend deux bras mutuellement opposés (12, 16) de l'araignée de commande (8) qui sont reliés rigidement l'un à l'autre,
- une deuxième partie (40) de l'araignée de commande (8) comprend les deux autres bras mutuellement opposés (10, 14) de l'araignée de commande (8), qui sont reliés rigidement à l'arbre (26),
- un actionneur (42) destiné à déplacer la première partie (38) par rapport à la deuxième partie (40) en translation axiale le long de l'axe central (18) de l'araignée de commande (8) est disposé entre la première partie et la deuxième de l'araignée de commande (8).

2. Dispositif de commande de pales de rotor selon la revendication 1, **caractérisé en ce qu'**un dispositif de verrouillage pour l'actionneur (42) est prévu pour assembler rigidement la première partie et la deuxième partie de l'araignée de commande (8).

3. Dispositif de commande de pales de rotor selon la revendication 2, **caractérisé en ce que** l'actionneur (42) est un actionneur hydraulique comprenant un cylindre hydraulique raccordé à au moins une conduite d'alimentation hydraulique et un piston (44) guidé à l'intérieur, et **en ce que** le dispositif de verrouillage comprend au moins une vanne d'arrêt disposée dans une conduite d'alimentation hydraulique.

4. Dispositif de commande de pales de rotor selon la revendication 2 ou 3, **caractérisé en ce que** le piston (44) est sollicité dans le cylindre hydraulique, sur un côté par un fluide hydraulique et, sur l'autre côté, par un élément élastique précontraint, le piston pouvant être verrouillé dans une position extrême par l'élément élastique.

5. Dispositif de commande de pales de rotor selon la revendication 3, **caractérisé en ce que** le piston (44) est sollicité dans le cylindre hydraulique sur les deux côtés par un fluide hydraulique et **en ce que**, pour les deux côtés, sont prévues des conduites d'alimentation hydrauliques qui sont chacune pourvues d'une vanne d'arrêt.

6. Dispositif de commande de pales de rotor selon l'une des revendications 2 à 5, **caractérisé en ce que** le dispositif de verrouillage comporte un verrou précontraint (50) qui peut être déverrouillé en présence d'un défaut de fonctionnement et qui, dans une position de verrouillage, s'engage dans un évidement conjugué (48) d'une partie (46) de l'actionneur.
